# EUROPÄISCHE PATENTANMELDUNG

(11) **EP 4 123 901 A1**
(43) Veröffentlichungstag der Anmeldung: **25.01.2023**
(21) Anmeldenummer: 22180188.9
(22) Anmeldetag: 21.06.2022
(51) Int. Cl.: H02S 20/23, H02S 20/25, H02S 30/00

(54) **MONTAGESYSTEM UND VERFAHREN ZUR MONTAGE VON GERAHMTEN PHOTOVOLTAIKMODULEN**

(30) Priorität: 22.06.2021 AT 601762021
(71) Anmelder: Hauser, Friedrich Gerhard, 4580 Windischgarsten (AT); Aigner, Gregor, 4580 Windischgarsten (AT)
(72) Erfinder: AIGNER, Gregor, 4580 Windischgarsten (AT); HAUSER, Friedrich Gerhard, 4580 Windischgarsten (AT)
(74) Vertreter: Burger, Hannes

(57) **Zusammenfassung**

Die Erfindung betrifft ein Montagesystem (1), sowie ein Verfahren zur Montage von gerahmten Photovoltaikmodulen (2) auf einer geneigten Montagefläche (3). Das Photovoltaikmodul (2) umfasst eine Modul-Oberseite (7), eine Modul-Unterseite (8), und einen Rahmen (9). Dabei ist vorgesehen, dass das Montagesystem (1) zumindest ein im Wesentlichen klammerförmiges Koppelelement (17) und zumindest ein Arretierelement (18) umfasst. Das Koppelelement (17) ist mit dem Rahmen (9) koppelbar, und das Arretierelement (18) ist mit dem Koppelelement (17) koppelbar. Das Arretierelement (18) weist zumindest einen Arretierabschnitt (19) auf, welcher unter einer Unterkonstruktion (4) der Montagefläche (3), insbesondere unter einer horizontalen Latte (15) der Unterkonstruktion (4), positionierbar ist. Das Montagesystem (1) ist im montierten Zustand des Photovoltaikmoduls (2) gegen ein Verschieben in Richtung zur Unterkante (6) der Montagefläche (3) und/oder gegen ein Abheben von der Unterkonstruktion (4) arretierbar oder arretiert.

## Beschreibung

Die Erfindung betrifft ein Montagesystem und ein Verfahren zur Montage von gerahmten Photovoltaikmodulen.

Montagesysteme zur Montage, insbesondere zur Indach-Montage, von gerahmten Photovoltaikmodulen sind der Fachwelt grundsätzlich bekannt, wobei gerahmte Module üblicherweise als Systemelement in ein vormontiertes Profilsystem eingehängt werden. Derartigen Montagesysteme sind beispielsweise von den Herstellern Eternit, Bramac und Siccro bekannt. Die bekannten Systeme sind zumeist baulich aufwendig, umfassen eine Vielzahl von Komponenten, insbesondere eine Vielzahl an Aluminiumbauteilen oder Bauteilen aus rostfreiem Stahl, und sind zudem in der Regel nicht universell für sämtliche am Markt erhältliche Modultypen einsetzbar. Zudem kann es durch die Montage bekannter Montagesystem auch zu einer Beschädigung einer etwaigen bestehenden Dacheindeckung kommen. Aufgrund des verschiedenartigen Aufbaus von Dächern, beispielsweise im Hinblick auf die Dachneigung oder den Sparrenabstand, ist bei bekannten Montagesystemen viel bzw. aufwendiges Unterkonstruktionsmaterial erforderlich, um die geforderte Statik im Hinblick auf eine zulässige Dachlast zu erreichen. Insbesondere ist am Markt eine Vielzahl verschieden dimensionierter Photovoltaikmodule erhältlich und Montagesysteme werden seitens der Modulhersteller auf einzelne dieser Module maßgeschneidert angeboten. Nicht zuletzt deshalb sind die bekannten Montagesysteme teuer und wenig flexibel an spezifische Montagebedingungen anpassbar. Darüber hinaus bedarf es einer eingehenden Montageschulung bzw. ausgebildeten Fachpersonals, um eine zumeist zeitaufwendige Montage der bekannten Systeme fachgerecht durchzuführen. Oftmals ist das Montagepersonal daher lediglich auf die Montage bestimmter Fabrikate spezialisiert.

Aufgabe der vorliegenden Erfindung war es, die Nachteile des Standes der Technik zu überwinden und eine Montagesystem und ein Montageverfahren zur Verfügung zu stellen, welche eine universelle, einfache und schnelle Montage, insbesondere Indach-Montage, von gerahmten Photovoltaikmodulen verschiedener Dimension und Bauart ermöglichen.

Diese Aufgabe wird durch ein Montagesystem und ein Verfahren gemäß den Ansprüchen gelöst.

Die Erfindung betrifft ein Montagesystem zur Montage, insbesondere zur Indach-Montage, von gerahmten Photovoltaikmodulen auf einer geneigten Montagefläche, insbesondere auf einer geneigten Dachfläche. Darüber hinaus ist mittels des Montagesystems auch eine Montage von gerahmten Photovoltaikmodulen auf einer Fassade, oder auf jeglicher geneigten Fläche oder auf jeglicher im Wesentlichen vertikalen Fläche bzw. Wandfläche denkbar.

Mit dem Begriff "geneigt", "Neigung" oder auch "Dachneigung" ist eine Neigung oder eine Steilheit einer Montagefläche, beispielsweise einer Dachfläche oder einer Fassadenfläche gemeint. Definiert ist die Neigung dabei zumeist mittels eines Winkels in Grad zur Waagerechten, oder auch in Prozent oder als Zahlenverhältnis. Während Dachflächen zumeist eine Neigung von bis zu 30° aufweisen, können Fassaden senkrecht oder im Wesentlichen ausgebildet sein.

Die geneigte Montagefläche umfasst dabei eine Unterkonstruktion, eine Oberkante und ein Unterkante. Wenn es sich bei der Montagefläche um eine Dachfläche handelt, so kann die Oberkante auch als First bezeichnet werden und die Unterkante als Traufe. Die Unterkonstruktion kann, insbesondere wenn es sich bei der Unterkonstruktion um eine Dachunterkonstruktion handelt, mehrere im montierten Zustand horizontal angeordnete Latten bzw. Dachlatten und mehrere im montierten Zustand vertikal angeordnete Latten bzw. Konterlatten umfassen. Die horizontalen bzw. vertikalen Latten können sowohl an Dachflächen, als auch an Fassaden oder dergleichen angeordnet sein.

Das gerahmte Photovoltaikmodul umfasst eine Modul-Oberseite, welche in einem montierten Zustand des Photovoltaikmoduls von der Montagefläche abgewandt ist, eine Modul-Unterseite, welche im montierten Zustand des Photovoltaikmoduls der Montagefläche zugewandt ist und zudem einen Rahmen. Üblicherweise umgibt bzw. umrahmt der Rahmen das Photovoltaikmodul an dessen Seitenflächen. Zudem kann der Rahmen sowohl die Modul-Oberseite, als auch die Modul-Unterseite partiell überragen bzw. partiell überdecken. Die Rahmen gerahmter Photovoltaikmodule weisen herstellerseitig zumeist spezielle Montage-Angriffspunkte auf, welche mittels Schrauben, Schienen, etc. auf einer Montagefläche fixierbar sind. Erfindungsgemäß ist vorgesehen, dass das Montagesystem zumindest ein im Wesentlichen klammerförmiges Koppelelement und zumindest ein Arretierelement umfasst. Diese beiden Komponenten können einstückig, also unabhängig voneinander als separate Bauteile ausgebildet sein. Es ist aber auch denkbar, dass diese beiden Komponenten einteilig, also quasi in einem Guss, ausgebildet sind.

Das zumindest eine im Wesentlichen klammerförmige Koppelelement ist mit dem Rahmen koppelbar. Das Koppeln kann aufgrund der Klammerform des Koppelelements dabei beispielsweise durch Herstellen einer Klemmverbindung mittels zumindest einer Schraube erfolgen, wobei der Rahmen von dem Koppelelement umfasst bzw. teilweise umschlossen werden kann. Um etwaige durch die punktuelle bzw. kleinflächige Krafteinleitung von der Schraube auf den Rahmen verursachte Beschädigungen am Rahmen, wie Dellen oder Kerben, zu vermeiden oder zumindest weitgehend hintan zu halten, kann es zweckmäßig sein, zwischen dem Koppelelement und dem geklemmten Bereich des Rahmens ein Unterlegelement vorzusehen. Bei einem solchen Unterlegelement kann es sich beispielsweise um eine Beilagscheibe oder auch um ein Kunststoffelement oder ein Gummielement handeln. Bei dem Koppelelement kann es sich beispielsweise um ein aus einem Blech geformtes Bauteil, ein Stranggussteil, ein extrudiertes Bauteil, ein Fräs- und/oder Drehteil, oder auch um ein Bauteil aus Glasfaserverbundmaterial oder einem anderen bzw. ähnlichen geeigneten Material handeln, wobei das Koppelelement insbesondere ein im Wesentlichen Quader-förmiges Bauteil sein kann.

Das zumindest eine Arretierelement ist mit dem Koppelelement koppelbar. Das Koppeln kann beispielsweise mittels zumindest einer Schraube erfolgen. Zudem weist das Arretierelement zumindest einen Arretierabschnitt auf, welcher unter der Unterkonstruktion, insbesondere unter einer horizontalen Latte bzw. Dachlatte der Unterkonstruktion, positionierbar ist. Bei dem Arretierelement kann es sich beispielsweise um ein aus einem Blech geformtes Bauteil, ein Stranggussteil, ein extrudiertes Bauteil, ein Fräs- und/oder Drehteil, oder auch um ein Bauteil aus Glasfaserverbundmaterial oder einem anderen bzw. ähnlichen geeigneten Material handeln.

Das Montagesystem ist im montierten Zustand des Photovoltaikmoduls gegen ein Verschieben in Richtung zur Unterkante und/oder gegen ein Abheben von der Unterkonstruktion arretierbar bzw. arretiert.

Im Vergleich zu den bekannten Montagesystemen für gerahmte Photovoltaikmodule hat das erfindungsgemäße Montagesystem den Vorteil, dass es baulich wenig komplex ist und mit nur wenigen Bauteilen einsetzbar ist und dennoch überaus stabil und langlebig ist. Indem das System ein Verschieben des montierten Moduls nach unten, also in Richtung Unterkante, verhindert bzw. indem es kein Abheben des montierten Moduls von der Montagefläche ermöglicht, können Photovoltaikmodule sicher und dauerhaft befestigt werden. Eine Sicherung gegen ein Verschieben nach oben, also in Richtung Oberkante ist dabei nicht zwingend erforderlich, da eine solche Bewegung des Moduls ohne eine beabsichtigte Manipulation, also lediglich hervorgerufen durch Schwerkraft, Wind, etc., nicht erfolgen kann bzw. eher unwahrscheinlich ist. Je nach Einsatzbedingungen kann es gegebenenfalls aber zweckmäßig sein, wenn zusätzlich eine Sicherung bzw. ein Sicherungs- oder Arretiermechanismus vorgesehen ist, mittels welchem zudem eine Sicherung gegen ein Verschieben nach oben gewährleistet ist. Zudem sind die erforderlichen Montagekomponenten günstig herstellbar und unabhängig vom Modell des gerahmten Moduls einsetzbar. Durch den einfachen Aufbau des Montagesystems ist es zudem möglich, dieses an verschiedenen Montagebedingungen, Dacheindeckungen und Modulgrößen flexibel anzupassen, ohne die Funktion oder Qualität des Systems negativ zu beeinflussen. Insbesondere kann eine Montage auch mit wenig geschultem Personal durchgeführt werden, wodurch die Montagearbeiten schneller und auch kostengünstiger durchführbar sind. Da das Montagesystem oder zumindest Teile des Montagesystems auf den Modulen vormontiert werden können, bevor die Module auf das Dach oder zur Fassade transportiert werden, können Arbeitseffizienz, Arbeitssicherheit und Arbeitsergonomie erheblich verbessert werden. Darüber hinaus können einzelne oder auch mehrere mittels des Montagesystems montierte Photovoltaikmodule jederzeit und einfach demontiert werden. Insbesondere kann eine Demontage auch unabhängig von der Position des zu demontierenden Photovoltaikmoduls, also auch aus der Mitte, erfolgen. Weil das Montagesystem eine besonders gute Flächenbelastung der montierten Photovoltaikmodule ermöglicht, können die Photovoltaikmodule auch zumindest an den Randbereichen begehbar sein, sodass ein Arbeiter auch zentral bzw. mittig positionierte Photovoltaikmodule erreichen kann. Mittels des Montagesystems ist es zudem möglich, eine Montage oder gegebenenfalls auch eine Demontage von Photovoltaikmodulen in beliebiger Reihenfolge bzw. angepasst an die jeweiligen Montagebedingungen durchzuführen. Beispielsweise kann eine Montage bzw. Demontage - bei Betrachtung der Montage- bzw. Dachfläche oder Fassadenfläche - bedarfsweise von oben nach unten, von links nach rechts, von innen nach außen oder jeweils umgekehrt erfolgen. Im Falle einer Montage des Montagesystems auf einer bestehenden Dacheindeckung oder einer bestehenden Fassadeneindeckung ist vorteilhafterweise keine Manipulation bzw. Beschädigung derselben erforderlich, was sich sowohl positiv auf die Dichtheit des Systems als auch auf etwaige Herstellergarantien auswirkt. Insbesondere, wenn das Montagesystem zur Indach-Montage von gerahmten Photovoltaikmodulen eingesetzt wird, ist keine zusätzliche statische Berechnung bzw. Anpassung der Unterkonstruktion im Hinblick auf eine zumeist regional bedingte bzw. gesetzlich vorgeschriebene zulässige Dachlast erforderlich. Durch den Einsatz des Montagesystems zur Indach-Montage kann damit beispielsweise eine Anpassung von Sparrenabständen entfallen. Insgesamt ist das Montagesystem aufgrund seines einfachen Aufbaus überaus ressourcenschonend und damit nachhaltig.

Gemäß einer vorteilhaften Weiterbildung kann vorgesehen sein, dass das Montagesystem zusätzlich zu dem Koppelelement und dem Arretierelement zumindest ein erstes Profil umfasst, welches eine Länge und eine Breite aufweist. Zweckmäßigerweise kann es sich bei dem ersten Profil um ein längliches, mehrfach gebogenes bzw. abgekantetes Blechteil handeln. Das erste Profil weist einen sich vollständig oder partiell über die Länge erstreckenden ersten Längsabschnitt auf, welcher erste Längsabschnitt eine Anlagefläche zur Anlage an die Unterkonstruktion, insbesondere an die Oberseite der horizontalen Latte bzw. Dachlatte der Unterkonstruktion, aufweist. Zudem weist das erste Profil einen sich vollständig oder partiell über die Länge erstreckenden zweiten Längsabschnitt auf. Die beiden Längsabschnitte verlaufen dabei im Wesentlichen parallel zueinander. Dabei ist vorgesehen, dass das Arretierelement zusätzlich oder alternativ zu dem Koppelelement mit dem zweiten Längsabschnitt des ersten Profils koppelbar ist. Durch das Vorsehen zumindest eines ersten Profils kann die Stabilität des Montagesystems weiter verbessert werden. Zudem kann auch eine Vormontage des Montagesystems auf dem Photovoltaikmodul, sowie eine Montage des Photovoltaikmoduls auf der Montagefläche erleichtert werden. Dies insbesondere deshalb, weil ein quasi auf Schienen vormontiertes Photovoltaikmodul besonders einfach auf der Montagefläche positioniert und montiert werden kann.

Des Weiteren kann es zweckmäßig sein, wenn der zweite Längsabschnitt des ersten Profils im Wesentlichen orthogonal zum ersten Längsabschnitt des ersten Profils ausgebildet ist. Dadurch kann die Stabilität bzw. Statik des Montagesystems zusätzlich erhöht werden. Ferner kann vorgesehen sein, dass das Montagesystem zudem zumindest ein zweites Profil umfasst, welches eine Länge und eine Breite aufweist, und welches zumindest einen sich vollständig oder partiell über die Länge erstreckenden ersten Längsabschnitt aufweist. Zweckmäßigerweise kann es sich bei dem zweiten Profil um ein längliches, mehrfach gebogenes bzw. abgekantetes Blechteil handeln. Der erste Längsabschnitt des zweiten Profils weist zumindest eine Anlagefläche zur direkten Anlage an die Unterkonstruktion, insbesondere an die horizontale Latte bzw. Dachlatte, auf. Diese zumindest eine Anlageflächen kann entweder lediglich lastabtragend auf der Unterkonstruktion bzw. auf der horizontalen Latte oder Dachlatte aufliegen oder auch auf dieser fixiert, beispielsweise ein- oder mehrfach mit dieser verschraubt, sein. Eine solche Fixierung kann insbesondere dann vorteilhaft sein, wenn das Dach stark geneigt ist. Darüber hinaus kann eine Fixierung auch den Montagevorgang erleichtern, da ein etwaiges Verrutschen während der Montage vermieden werden kann. Die Anlagefläche des ersten Längsabschnitts des ersten Profils ist gemäß dieser vorteilhaften Weiterbildung zumindest abschnittsweise an die Anlagefläche des ersten Längsabschnitt des zweiten Profils anlegbar. Dadurch kann sowohl eine stabile Abstützung der beiden Profile aufeinander bzw. auf der Unterkonstruktion, als auch eine regendichte oder zumindest im Wesentlichen regendichte Verbindung zwischen den beiden Profilen realisiert werden.

Die Komponenten des Montagesystems, also das zumindest eine erste Profil und/oder das zumindest eine zweite Profil und/oder das Koppelelement und/oder das Arretierelement können vorteilhafterweise aus rostfreiem Stahlblech, aus Gussmaterial, aus Aluminiumblech oder aus einem Verbundmaterial bzw. Glasfaserverbundmaterial oder einem anderen bzw. ähnlichen geeigneten Material hergestellt sein. Diese Materialien sind sowohl vergleichsweise leicht und dennoch überaus stabil und langlebig.

Darüber hinaus kann vorgesehen sein, dass das erste Profil zumindest einen sich vollständig oder partiell über die Länge erstreckenden dritten Längsabschnitt aufweist, wobei der dritte Längsabschnitt in Bezug auf die Anlagefläche des ersten Längsabschnitts des ersten Profils zumindest zweifach abgewinkelt ist. Mit anderen Worten weist das erste Profil bei Betrachtung seiner Breite bzw. seines Querschnitts einen abgewinkelten bzw. zackenförmigen Querschnitt auf. Zudem kann vorgesehen sein, dass das zweite Profil einen sich vollständig oder partiell über die Länge erstreckenden zweiten Längsabschnitt aufweist, wobei der zweite Längsabschnitt in Bezug auf die Anlagefläche des ersten Längsabschnitts des zweiten Profils zumindest zweifach abgewinkelt ist. Mit anderen Worten weist das zweite Profil bei Betrachtung seiner Breite bzw. seines Querschnitts einen abgewinkelten bzw. zackenförmigen Querschnitt auf. Dabei kann der dritte Längsabschnitt des ersten Profils zumindest bereichsweise formkomplementär zu dem zweiten Längsabschnitt des zweiten Profils ausgebildet sein. Dadurch kann sowohl eine stabile Abstützung der beiden Profile aufeinander bzw. auf der Unterkonstruktion, als auch eine regendichte oder zumindest im Wesentlichen regendichte Verbindung zwischen den beiden Profilen realisiert werden. Durch die formkomplementäre Ausbildung der jeweiligen übereinanderliegenden Bereiche kann zudem eine Montage vereinfacht werden, selbst wenn es sich bei dem Montagepersonal um wenig geschulte Personen handelt.

Vorteilhaft ist auch eine Ausprägung, gemäß welcher vorgesehen sein kann, dass das zumindest eine zweite Profil in Bezug auf die Anlagefläche des ersten Längsabschnitts einen symmetrischen, bevorzugt im Wesentlichen M-förmigen, Querschnitt aufweist. Mit anderen Worten weist das zweite Profil bei Betrachtung seiner Breite einen symmetrischen, bevorzugt im Wesentlichen M-förmigen Querschnitt auf. Ein derart ausgebildetes zweites Profil kann insbesondere dann vorteilhaft sein, wenn mehrere Photovoltaikmodule nebeneinander montiert werden sollen. Dabei kann das zweite Profile durch seine symmetrische Ausbildung beidseitig mit jeweils einem ersten Profile bzw. mit jeweils zumindest einem Koppelelement verbunden werden. Dies kann den Montageaufwand weiter vereinfachen und verkürzen.

Gemäß einer Weiterbildung ist es möglich, dass das zweite Profil entlang seiner Länge eine Rinne aufweist. Dies kann durch eine entsprechende Kantung bzw. Abwinkelung des Profils realisiert werden. So kann das zweite Profil, neben seiner stabilisierenden Funktion als Anlagefläche für das erste Profil, zudem eine wasserabführende Funktion erfüllen. Dies kann insbesondere dann vorteilhaft sein, wenn das zweite Profil symmetrische ausgebildet ist bzw. wenn das zweite Profil zur Montage zweier benachbarter Photovoltaikmodule eingesetzt wird. Über einen montage- und toleranzbedingten Spalt zwischen zwei nebeneinander montierter Module kann Wasser eindringen, welches in die darunter verlaufende Rinne fließt und dort in Richtung zur Unterkante abgeleitet wird, ohne weiter in die Dachkonstruktion einzudringen.

Ferner kann es zweckmäßig sein, wenn das klammerförmige Koppelelement einen Schlitz, eine Nut und/oder eine Kerbe zur Ausbildung einer Schraub, Steck- und/oder Rastverbindung mit dem Rahmen aufweist. Wie bereits beschrieben, kann die Koppelung bzw. Klemmung zwischen Koppelelement und Rahmen mit einer oder mehreren Schrauben erfolgen. Alternativ wäre aber auch eine schraubenlose Koppelung denkbar. Insbesondere, wenn es infolge einer Schraubverbindung durch kleinflächige bzw. punktuelle Krafteinwirkung zu unzulässig hohem Druck am Rahmen kommt, wäre der Einsatz von zusätzlichen Schutzelementen wie einer Beilagscheibe denkbar. Druckstellen am Rahmen, welcher oftmals aus weichem Material wie beispielsweise Aluminium gefertigt ist, können so vermieden oder zumindest weitgehend hintangehalten werden, und so Schäden oder ein etwaiger Garantieverlust seitens des Modul-Herstellers vermieden werden.

Darüber hinaus kann vorgesehen sein, dass das Photovoltaikmodul in seinem montierten Zustand in Richtung zur Unterkante ein weiteres Photovoltaikmodul überragt. Bevorzugt überragt das Photovoltaikmodul das weitere, quasi darunterliegende, Photovoltaikmodul um maximal 5 cm, besonders bevorzugt um maximal 2 cm, insbesondere um maximal 1 cm. Durch einen gewissen Überstand bzw. durch ein gewisses Überlappen der dachziegelartig übereinander angeordneten Module kann ein Eindringen von Wasser zwischen den übereinander angeordneten Modulen vermieden oder verhindert werden. Allerdings darf die Überlappung nur in etwa so groß sein, wie jener Rahmenbereich, der die Modul-Oberseite bedeckt, sodass es zu keiner Zellenverschattung der Photovoltaikzellen des darunterliegenden Photovoltaikmoduls kommt. Eine zu große Überlappung kann zu unerwünschten Leistungseinbußen der Module führen. Zweckmäßigerweise kann im Überlappungsbereich zwischen zwei übereinander angeordneten Modulen ein Dichtmittel und/oder ein Schutzgitter vorgesehen sein, welches zum einen ein Eindringen von Wasser und zum anderen ein Eindringen von Schmutz, Staub, Insekten und dergleichen verhindert.

Des Weiteren kann vorgesehen sein, dass das Arretierelement zumindest einen Stabilisierungsabschnitt aufweist, welcher sich in einem montierten Zustand des Photovoltaikmoduls im Wesentlichen parallel zur Unterkante erstreckt und welcher an der Unterkonstruktion, insbesondere an der horizontalen Latte bzw. Dachlatte, abstützbar ist. Insbesondere wenn das Arretierelement aus einem Blech geformt ist, kann es sich bei dem Stabilisierungsabschnitt um eine gebogene Lasche handeln. Grundsätzlich ist es ausreichend, den Stabilisierungsabschnitt auf nur einer Seite des Arretierelements vorzusehen. Es kann aber auch zweckmäßig sein, wenn das Arretierelement symmetrisch ausgebildet ist und damit auf jeder Seite einen Stabilisierungsabschnitt aufweist. Damit kann die Montage weiter vereinfacht und Montagefehler vermieden werden.

Gemäß einer besonderen Ausprägung ist es möglich, dass das Montagesystem, insbesondere das Arrretierelement, gegenüber der Unterkonstruktion, insbesondere gegenüber der horizontalen Latte bzw. Dachlatte, werkzeuglos und lösbar arretierbar bzw. arretiert ist. Dies kann sowohl die Montage, als auch eine etwaige Demontage im Reparatur- und Wartungsfall erleichtern.

Entsprechend einer vorteilhaften Weiterbildung kann vorgesehen sein, dass das Montagesystem im montierten Zustand des Photovoltaikmoduls bei Betrachtung der Modul-Oberseite nicht sichtbar ist. Alternativ oder zusätzlich kann vorgesehen sein, dass das Montagesystem das Photovoltaikmodul im montierten Zustand des Photovoltaikmoduls bei Betrachtung der Modul-Oberseite nicht überragt. Neben einem optisch überaus ansprechenden Effekt bringt diese Weiterbildung den Vorteil, dass Beschädigungen am Montagesystem durch äußere Einflüsse vermieden werden können. Zudem hat diese Weiterbildung den Vorteil, dass etwaige Leistungseinbußen bzw. Leistungsverluste infolge eines Überdeckens der Modul-Oberseite durch Komponenten des Montagesystems vermieden werden.

Insbesondere kann es vorteilhaft sein, wenn ein Kontaktbereich zwischen dem Photovoltaikmodul und dem zumindest einen Koppelelement, und/oder ein Kontaktbereich zwischen dem zumindest einen ersten Profil und dem zumindest einen zweiten Profil dichtmittelfrei ausgebildet ist. Indem die Kontaktbereiche einander flächig berühren bzw. zueinander formkomplementär ausgebildet sind, kann auf den Einsatz von Dichtmitteln wie Dichtpasten, Gummierungen und dergleichen verzichtet werden. Insbesondere wenn Wasser über den Spalt zwischen benachbarten Modulen direkt in eine Rinne des zweiten Profils fließen kann, kann sich der Einsatz von zusätzlichen Dichtmitteln in den Kontaktbereichen der Systemkomponenten erübrigen. Dies kann den Montagevorgang verkürzen, macht Wartungen oder Erneuerungen der Dichtmittel überflüssig und gewährleistet dennoch eine hohe Lebensdauer.

Ferner kann vorgesehen sein, dass ein Spalt zwischen zwei parallel zur Unterkante nebeneinander montierten Photovoltaikmodulen maximal 15 mm, bevorzugt maximal 10 mm, besonders bevorzugt maximal 5 mm beträgt. Je nach Maßtoleranz der Photovoltaikmodule kann damit im Zuge der Montage ein Spalt angepasst werden, sodass dieser nur so breit ist, wie zwingend erforderlich.

Darüber hinaus kann vorgesehen sein, dass das Montagesystem zumindest ein im Wesentlichen keilförmiges Dachneigungs-Ausgleichelement zum Ausgleichen der Dachneigung umfasst, welches Dachneigungs-Ausgleichelement auf oder unter der Unterkonstruktion, insbesondere auf oder unter der horizontalen Latte bzw. Dachlatte, positionierbar ist, um einen bedarfsweisen Ausgleich der Dachneigung und damit eine dachziegelartige Anordnung von in vertikaler Richtung gesehen übereinander angeordneten Modulen ermöglicht bzw. erleichtert. Insbesondere bei der Montage von Photovoltaikmodulen auf neuen Dächern kann der Einsatz von Dachneigungs-Ausgleichelementen zweckmäßig sein. Bei dem keilförmigen Dachneigungs-Ausgleichelement kann es sich beispielsweise um eine formangepasste Konterlatte handeln. Es kann auch sein, dass das keilförmige Dachneigungs-Ausgleichelement auf der Montagefläche oder auf einer Konterlatte angeordnet ist. In jedem Fall wird das keilförmige Dachneigungs-Ausgleichelement so montiert, dass es sich orthogonal zur Unterkante bzw. zur Oberkante bzw. zwischen Oberkante und Unterkante längserstreckt. Bevorzugt ist das keilförmige Dachneigungs-Ausgleichelement ebenso wie die Unterkonstruktion aus Holz gefertigt. Grundsätzlich wären jedoch auch andere, insbesondere andere nachhaltige Materialien denkbar. Dies ermöglicht einen einfachen bedarfsorientiert an das jeweilige Dach anpassbaren Zuschnitt.

Vorteilhaft ist auch eine Ausprägung, gemäß welcher vorgesehen sein kann, dass der zweite Längsabschnitt des ersten Profils an seinem im montierten Zustand des Photovoltaikmoduls der Unterkante zugewandten Ende eine Aussparung aufweist, welche Aussparung zur Anlage am Rahmen ausgebildet ist. Dadurch kann eine Montage weiter vereinfacht werden und eine Stabilität der montierten Module erhöht werden.

Unabhängig davon wird die Aufgabe der Erfindung auch durch ein Verfahren zur Montage, insbesondere zur Indach-Montage, von gerahmten Photovoltaikmodulen auf einer geneigten Montagefläche, insbesondere auf einer geneigten Dachfläche, gelöst. Darüber hinaus kann das Montageverfahren zur Montage von gerahmten Photovoltaikmodulen auf einer Fassade, oder auf jeglicher geneigten Fläche oder auf jeglicher im Wesentlichen vertikalen Wandfläche eingesetzt werden.

Die geneigte Montagefläche umfasst dabei eine Unterkonstruktion, eine Oberkante und eine Unterkante. Wenn es sich bei der Montagefläche um eine Dachfläche handelt, so kann die Oberkante auch als First bezeichnet werden und die Unterkante als Traufe. Die Unterkonstruktion kann, insbesondere wenn es sich bei der Unterkonstruktion um eine Dachunterkonstruktion handelt, mehrere im montierten Zustand horizontal angeordnete Latten bzw. Dachlatten und mehrere im montierten Zustand vertikal angeordnete Konterlatten umfassen. Die horizontalen bzw. vertikalen Latten können sowohl an Dachflächen, als auch an Fassaden oder dergleichen angeordnet sein.

Gemäß dem Verfahren ist vorgesehen, dass zumindest ein gerahmtes Photovoltaikmodul bereitgestellt wird. Dieses umfasst eine Modul-Oberseite, welche in einem montierten Zustand des Photovoltaikmoduls von der Montagefläche abgewandt ist, eine Modul-Unterseite, welche im montierten Zustand des Photovoltaikmoduls der Montagefläche zugewandt ist, und zudem einen Rahmen. Üblicherweise umgibt bzw. umrahmt der Rahmen das Photovoltaikmodul an dessen Seitenflächen. Zudem kann der Rahmen sowohl die Modul-Oberseite, als auch die Modul-Unterseite partiell überragen bzw. partiell überdecken. Die Rahmen gerahmter Photovoltaikmodule weisen herstellerseitig zumeist spezielle Montage-Angriffspunkte auf, welche mittels Schrauben, Schienen, etc. auf einer Montagefläche fixierbar sind.

Des Weiteren ist vorgesehen, dass ein Montagesystem bereitgestellt wird, welches entsprechend der obenstehenden Beschreibung bzw. nach einem der Ansprüche ausgebildet ist. Das Montagesystem umfasst zumindest zwei Koppelelemente und zumindest zwei Arretierelemente.

Jeweils eine sich im montierten Zustand des Photovoltaikmoduls von der Oberkante in Richtung zur Unterkante erstreckende Seite des Rahmens wird mit jeweils zumindest einem der klammerförmigen Koppelelemente gekoppelt. Zudem erfolgt ein Koppeln der Koppelelemente mit jeweils einem der Arretierelemente, wodurch die Vormontage im Wesentlichen abgeschlossen ist. Koppel- und Arretierelemente werden somit stets paarweise an dem Rahmen befestigt. Vorteilhafterweise können Koppelelemente an jenen Positionen an den Rahmenseiten positioniert werden, wo der Rahmen bzw. das Photovoltaikmodul in seinem späteren, fertig montierten Zustand, die horizontalen Latten bzw. Dachlatten kreuzt. Dies ermöglicht in weiterer Folge ein Positionieren der Arretierelemente unter den horizontalen Latten bzw. Dachlatten.

Anschließend werden jeweils die Koppelelemente an die Unterkonstruktion angelegt, insbesondere an eine horizontale Latte bzw. Dachlatte der Unterkonstruktion angelegt. Des Weiteren wird das mit den zumindest zwei Koppelelementen und mit den zumindest zwei Arretierelementen vormontierte Photovoltaikmodul im Wesentlichen parallel zur Unterkonstruktion in Richtung zur Unterkante verschoben. Dabei wird ein Arretierabschnitt des Arretierelements unter der Unterkonstruktion, insbesondere unter der horizontalen Latte bzw. unter der Dachlatte der Unterkonstruktion, positioniert, sodass das Montagesystem im montierten Zustand des Photovoltaikmoduls gegen ein Verschieben in Richtung zur Unterkante und/oder gegen ein Abheben von der Unterkonstruktion arretiert wird.

An dieser Stelle sei explizit erwähnt, dass die einzelnen Verfahrensschritte und deren zeitliche Abfolge nicht zwingend in der angeführten Reihenfolge erfolgen müssen, sondern auch eine davon abweichende zeitliche Abfolge möglich ist. Bevorzugt erfolgt jedoch eine sukzessive und somit aufeinander folgende zeitliche Abfolge der angeführten Verfahrensschritte.

Im Vergleich zu den bekannten Montageverfahren für gerahmte Photovoltaikmodule hat das erfindungsgemäße Verfahren den Vorteil, dass es durch den Einsatz eines baulich wenig komplexen Montagesystems, welches mit nur wenigen Bauteilen einsetzbar ist und welches dennoch überaus stabil und langlebig ist, schnell, einfach und sicher durchführbar ist. Indem das System ein Verschieben des montierten Moduls nach unten, also in Richtung Unterkante, verhindert bzw. indem es kein Abheben des montierten Moduls von der Montagefläche ermöglich, können Photovoltaikmodule sicher und dauerhaft befestigt werden. Dies nicht zuletzt auch durch die Positionierung des Arretierabschnitts unter der Unterkonstruktion bzw. unter der horizontalen Latte bzw. unter der Dachlatte. Eine Sicherung gegen ein Verschieben nach oben, also in Richtung Oberkante ist dabei nicht erforderlich, da eine solche Bewegung des Moduls ohne eine beabsichtigte Manipulation, also lediglich hervorgerufen durch Schwerkraft, Wind, etc., nicht erfolgen kann bzw. eher unwahrscheinlich ist. Je nach Einsatzbedingungen kann es gegebenenfalls aber zweckmäßig sein, wenn zusätzlich eine Sicherung bzw. ein Sicherungs- oder Arretiermechanismus vorgesehen ist, mittels welchem zudem eine Sicherung gegen ein Verschieben nach oben gewährleistet ist. Zudem sind die erforderlichen Montagekomponenten günstig herstellbar und unabhängig vom Modell des gerahmten Moduls einsetzbar. Durch den einfachen Aufbau des Montagesystems ist es zudem möglich, dieses an verschiedenen Montagebedingungen, Dacheindeckungen und Modulgrößen flexibel anzupassen, ohne die Funktion oder Qualität des Systems negativ zu beeinflussen. Insbesondere kann die Montage auch mit wenig geschultem Personal durchgeführt werden, wodurch die Montagearbeiten schneller und auch kostengünstiger durchführbar sind. Da das Montagesystem oder zumindest Teile des Montagesystems auf den Modulen vormontiert werden können, bevor die Module auf das Dach oder zur Fassade transportiert werden, können Arbeitseffizienz, Arbeitssicherheit und Arbeitsergonomie erheblich verbessert werden. Darüber hinaus können einzelne oder auch mehrere mittels des Montagesystems montierte Photovoltaikmodule jederzeit und einfach demontiert werden. Insbesondere kann eine Demontage auch unabhängig von der Position des zu demontierenden Photovoltaikmoduls, also auch aus der Mitte, erfolgen. Weil das Montagesystem eine besonders gute Flächenbelastung der montierten Photovoltaikmodule ermöglicht, können die Photovoltaikmodule auch zumindest an den Randbereichen begehbar sein, sodass ein Arbeiter auch zentral bzw. mittig positionierte Photovoltaikmodule erreichen kann. Mittels des Montagesystems ist es zudem möglich, eine Montage oder gegebenenfalls auch eine Demontage von Photovoltaikmodulen in beliebiger Reihenfolge bzw. angepasst an die jeweiligen Montagebedingungen durchzuführen. Beispielsweise kann eine Montage bzw. Demontage - bei Betrachtung der Montage- bzw. Dachfläche oder Fassadenfläche - bedarfsweise von oben nach unten, von links nach rechts, von innen nach außen oder jeweils umgekehrt erfolgen. Im Falle einer Montage des Montagesystems auf einer bestehenden Dacheindeckung oder einer bestehenden Fassadeneindeckung ist vorteilhafterweise keine Manipulation bzw. Beschädigung derselben erforderlich, was sich sowohl positiv auf die Dichtheit des Systems als auch auf etwaige Herstellergarantien auswirkt. Insbesondere, wenn das Montagesystem zur Indach-Montage von gerahmten Photovoltaikmodulen eingesetzt wird, ist keine zusätzliche statische Berechnung bzw. Anpassung der Unterkonstruktion im Hinblick auf eine zumeist regional bedingte bzw. gesetzlich vorgeschriebene zulässige Dachlast erforderlich. Durch den Einsatz des Montagesystems zur Indach-Montage kann damit beispielsweise eine Anpassung von Sparrenabständen entfallen. Insgesamt ist das Montagesystem aufgrund seines einfachen Aufbaus überaus ressourcenschonend und damit nachhaltig.

Gemäß einer Weiterbildung kann vorgesehen sein, dass das Montagesystem zusätzlich mit zumindest zwei ersten Profilen bereitgestellt wird, welche bevorzugt baugleich und gespiegelt ausgebildet sind. Die ersten Profile sind dabei entsprechend der vorhergehenden Beschreibung bzw. gemäß den Ansprüchen ausgebildet. Dabei werden die Koppelelemente alternativ oder zusätzlich zu den Arretierelementen mit jeweils dem zweiten Längsabschnitt der ersten Profile gekoppelt, sodass das Photovoltaikmodul an beiden Rahmenseiten mit jeweils einem der ersten Profile verbunden ist. Den derart auf dem Photovoltaikmodul vormontierten ersten Profilen kommt dabei quasi eine Schienenfunktion zu. Jeweils der erste Längsabschnitt der vormontierten zumindest zwei ersten Profile wird in weiterer Folge an die Unterkonstruktion, insbesondere an eine horizontale Latte bzw. Dachlatte der Unterkonstruktion, angelegt. Somit sind die ersten Profile jeweils zwischen den Koppelelementen und der Unterkonstruktion positioniert. Das mit den zumindest zwei ersten Profilen, mit den zumindest zwei Koppelelementen und mit den zumindest zwei Arretierelementen vormontierte Photovoltaikmodul wird im Wesentlichen parallel zur Unterkonstruktion in Richtung zur Unterkante verschoben. Durch das Vorsehen zumindest zweier erster Profile kann die Stabilität des Systems weiter erhöht werden und eine Montage einfacher und komfortabler und zudem auch weniger fehleranfällig erfolgen. Die ersten Profile, welche quasi als Schienen fungieren, können einfach an die Unterkonstruktion bzw. die horizontale Latte oder Dachlatten angelegt und auf diesen verschoben werden.

Ferner kann es zweckmäßig sein, wenn das Photovoltaikmodul durch Verschieben des Photovoltaikmoduls parallel zur Unterkonstruktion in Richtung zum Oberkante gelöst wird. So kann auf einfache und bevorzugt werkzeuglose Art und Weise eine Demontage des Moduls im Falle von Reparatur- und Wartungsarbeiten durchgeführt werden.

Darüber hinaus kann vorgesehen sein, dass zumindest zwei zweite Profile direkt an die Unterkonstruktion, insbesondere an die horizontale Latte bzw. Dachlatte, angelegt werden. Die zweiten Profile sind dabei entsprechend der vorhergehenden Beschreibung bzw. gemäß den Ansprüchen ausgebildet. Dabei wird die Anlageflächen der ersten Längsabschnitte der zumindest zwei an dem Photovoltaikmodul vormontierten ersten Profile zur Anlage an die Anlageflächen der ersten Längsabschnitte der zumindest zwei zweiten Profile gebracht. Alternativ oder zusätzlich werden die dritten Längsabschnitte der zumindest zwei ersten Profile zur Anlage an die zumindest bereichsweise formkomplementären zweiten Längsabschnitte der zumindest zwei zweiten Profile gebracht. Dadurch kann sowohl eine stabile Abstützung der beiden Profile aufeinander bzw. auf der Unterkonstruktion, als auch eine regendichte oder zumindest im Wesentlichen regendichte Verbindung zwischen den beiden Profilen realisiert werden.

Des Weiteren kann vorgesehen sein, dass an zumindest einzelnen jener Stellen der Unterkonstruktion, an denen eine horizontale Latte bzw. Dachlatte angeordnet ist und an denen die ersten Längsabschnitte der zumindest zwei ersten Profile die horizontale Latte bzw. Dachlatte kreuzen, jeweils ein Koppelelement und ein Arretierelement mit dem Rahmen der Modul-Unterseite verbunden werden. Dadurch kann ein Verrutschen des Moduls nach unten, sowie ein Abheben des Moduls von der Montagefläche zusätzlich verhindert werden und die Stabilität des montierten Moduls verbessert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Schnittansicht eines an zwei Photovoltaikmodulen montierten Montagesystems;
- Fig. 2: eine dreidimensionale Ansicht eines Montagesystems;
- Fig. 3: eine dreidimensionale Ansicht einer Montagefläche mit einer Unterkonstruktion und mehreren zweiten Profilen;
- Fig. 4: eine Draufsicht auf das in der Fig. 1 gezeigte montierte Montagesystem;
- Fig. 5: eine dreidimensionale Detailansicht eines Montagesystems während der Montage;
- Fig. 6: eine dreidimensionale Detailansicht eines Montagesystems nach der Montage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf, "aufweisend", "schließt ein", "einschließlich", "enthält", "enthaltend" und jegliche Variationen dieser eine nicht ausschließliche Einbeziehung abdecken.

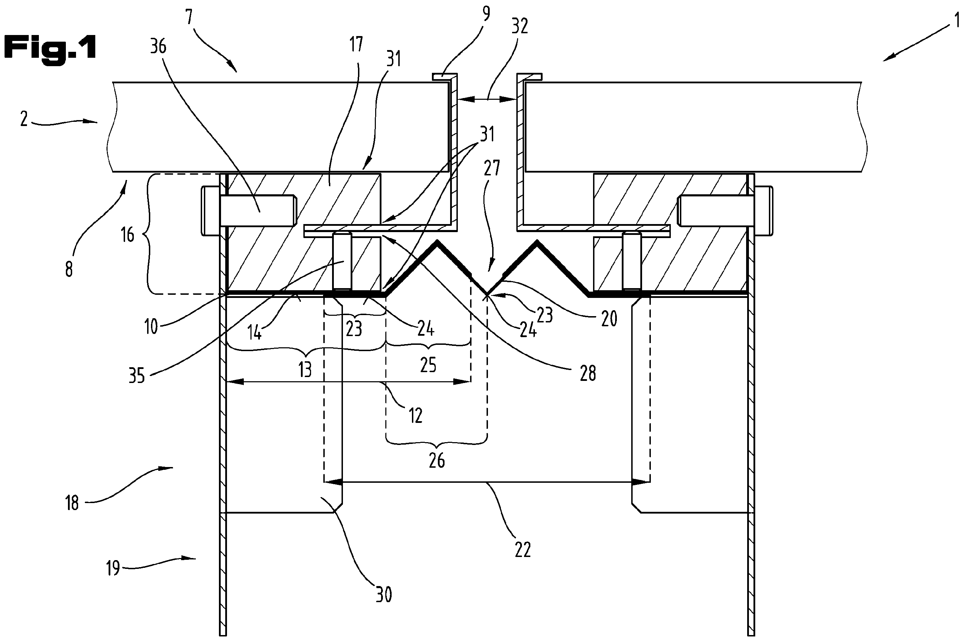

Nachfolgend werden die Fig. 1 bis 6, um unnötige Wiederholungen zu vermeiden, soweit als möglich bzw. sinnvoll in einer Zusammenschau beschrieben. Dabei werden stets für gleiche Teile gleiche Bezugszeichen bzw. Bauteilbezeichnungen verwendet.

Die Fig. 1 zeigt eine Schnittansicht eines an zwei gerahmten Photovoltaikmodulen 2 montierten Montagesystems 1. Gezeigt sind dabei zwei horizontal nebeneinander angeordnete Photovoltaikmodule 2.

Das Montagesystem 1 ist zur Montage, insbesondere zur Indach-Montage, auf einer geneigten Montagefläche 3, insbesondere auf einer geneigten Dachfläche, vorgesehen, wobei die Montagefläche 3 eine Unterkonstruktion 4, eine Oberkante 5 und eine Unterkante 6 umfasst. Wenn es sich bei der Montagefläche 3 um eine Dachfläche handelt, so kann die Oberkante 5 auch als First bezeichnet werden und die Unterkante 6 als Traufe. Die Photovoltaikmodule 2 umfassen jeweils eine Modul-Oberseite 7, die in einem montierten Zustand des Photovoltaikmoduls 2 von der Montagefläche 3 abgewandt ist, eine Modul-Unterseite 8, die im montierten Zustand des Photovoltaikmoduls 2 der Montagefläche 3 zugewandt ist, und einen Rahmen 9. Der Rahmen 9 ist dabei üblicherweise von Seiten des Modulherstellers fest mit dem Modul verbunden und umrahmt die Modulseiten vollständig oder partiell. Zudem umschließt bzw. überdeckt der Rahmen 9 - wie in der Fig. 1 dargestellt - einen schmalen bzw. kleinen Bereich der Modul-Oberseite 7, und überragt einen zumeist vergleichsweise größeren Bereich der Modul-Unterseite 8. Natürlich sind auch anders ausgebildete Rahmen 9 möglich. Der Rahmen 9 ist üblicherweise als Anschlagmittel für Montagesysteme vorgesehen.

Das Montagesystem 1 umfasst je Photovoltaikmodul 2 zumindest ein im Wesentlichen klammerförmiges Koppelelement 17 und zumindest ein Arretierelement 18. Das Koppelelement 17 ist mit dem Rahmen 9 gekoppelt, und das Arretierelement 18 ist wiederum mit dem Koppelelement 17 gekoppelt. Das Koppelelement 17 ist im Wesentlichen würfel- bzw. quaderförmig ausgebildet und weist durch seine Klammerform einen Schlitz 28 zur Ausbildung einer Schraub-, Steck- und/oder Rastverbindung mit dem Rahmen 9 auf. Das Arretierelement 18 weist zumindest einen Arretierabschnitt 19 auf, welcher derart ausgebildet ist, dass er unter der Unterkonstruktion 4, insbesondere unter einer horizontalen Latte 15, beispielsweise unter einer Dachlatte, der Unterkonstruktion 4, positionierbar ist. Beispielsweise kann der Arretierabschnitt 19 laschenförmig sein. Das Montagesystem 1 ist im montierten Zustand des Photovoltaikmoduls 2 gegen ein Verschieben in Richtung zur Unterkante 6 und/oder gegen ein Abheben von der Unterkonstruktion 4 arretierbar bzw. arretiert.

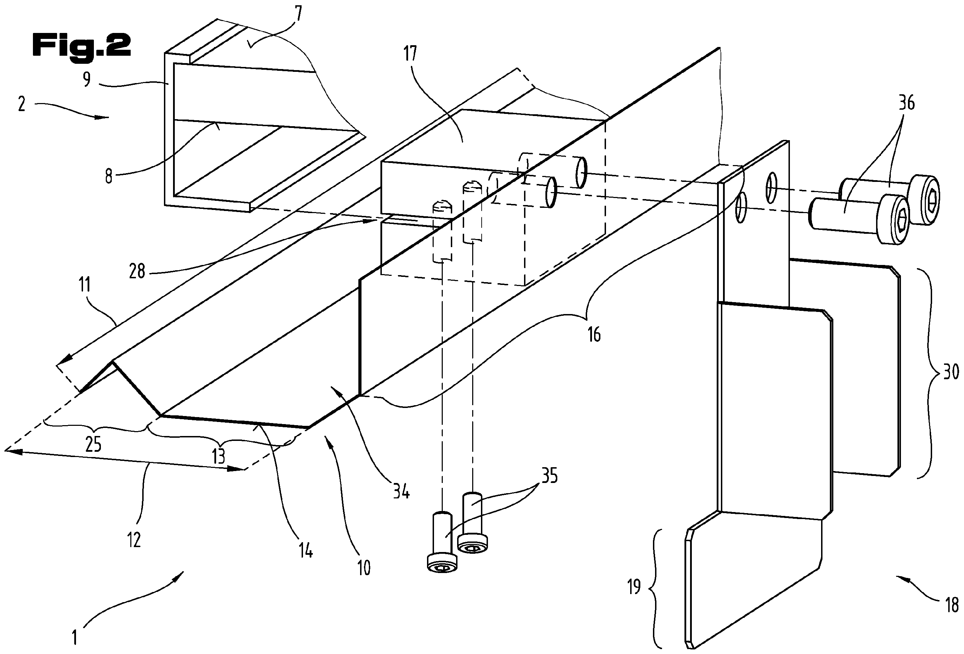

Das Montagesystem 1 umfasst zudem zumindest ein erstes Profil 10, welches eine Länge 11 und eine Breite 12 aufweist, und welches einen sich vollständig oder partiell über die Länge 11 erstreckenden ersten Längsabschnitt 13 aufweist. Besonders in der Fig. 2 ist erkennbar, dass das erste Profil 10 durch ein längliches, mehrfach abgekantetes bzw. mehrfach gebogenes Blech gebildet sein kann, wobei durch die mehrfache Abkantung bzw. Abwinkelung diverse Längsabschnitte gebildet sind. Der erste Längsabschnitt 13 weist eine ebene Anlagefläche 14 zur Anlage an die Unterkonstruktion 4, insbesondere an die horizontale Latte 15 bzw.

Dachlatte der Unterkonstruktion 4, auf. Zudem weist das erste Profil 10 einen sich vollständig oder partiell über die Länge 11 erstreckenden zweiten Längsabschnitt 16 auf. Das Arretierelement 18 ist dabei zusätzlich zu dem Koppelelement 17 auch mit dem zweiten Längsabschnitt 16 des ersten Profils 10 koppelbar. Bevorzugt sind sowohl der zweite Längsabschnitt 16, das Koppelelement 17 und auch der Koppelabschnitt des Arretierelements 18 flächig bzw. plan ausgebildet, sodass die drei Bauteile direkt bzw. flächig miteinander gekoppelt werden können. In den Fig. 1 und 2 ist gezeigt, dass der zweite Längsabschnitt 16 des ersten Profils 10 im Wesentlichen orthogonal zum ersten Längsabschnitt 13 des ersten Profils 10 ist.

Die Fig. 1, 3, 4, 5 und 6 zeigen auch, dass das Montagesystem 1 des Weiteren zumindest ein zweites Profil 20 umfasst, welches ebenso wie das erste Profil 10 eine Länge 21 und eine Breite 22 aufweist. Das zweite Profil 20 weist zumindest einen sich vollständig oder partiell über die Länge 21 erstreckenden ersten Längsabschnitt 23 auf, welcher erste Längsabschnitt 23 zumindest eine Anlagefläche 24 zur direkten Anlage an die Unterkonstruktion 4, insbesondere an die horizontale Latte 15, aufweist. Die Anlagefläche 14 des ersten Längsabschnitts 13 des ersten Profils 10 ist zumindest abschnittsweise an die Anlagefläche 24 des ersten Längsabschnitt 23 des zweiten Profils 20 anlegbar. Dieser Zustand ist besonders in der Fig. 1 veranschaulicht.

Darüber hinaus weist das erste Profil 10 zumindest einen sich vollständig oder partiell über die Länge 11 erstreckenden dritten Längsabschnitt 25 auf, welcher in Bezug auf die Anlagefläche 14 des ersten Längsabschnitts 13 zumindest zweifach abgewinkelt ist. Bei Betrachtung der Breite 12 des ersten Profils 10 bzw. in den Fig. 1 und 2 ist diese Kantung des ersten Profils 10 deutlich als Zacke bzw. Spitze erkennbar, wobei die Spitze in einem montierten Zustand des ersten Profils 10 nach oben bzw. von der Montagefläche 3 weg zeigt. Das zweite Profil 20 weist ebenso einen sich vollständig oder partiell über die Länge 21 erstreckenden zweiten Längsabschnitt 26 auf, welcher in Bezug auf die Anlagefläche 24 des ersten Längsabschnitts 23 zumindest zweifach abgewinkelt ist. Bei Betrachtung der Breite 22 des zweiten Profils 20 bzw. in den Fig. 1 und 2 ist diese Kantung des zweiten Profils 20 deutlich als Zacke bzw. Spitze erkennbar, wobei die Spitze in einem montierten Zustand des zweiten Profils 20 nach oben bzw. von der Montagefläche 3 weg zeigt. Der dritte Längsabschnitt 25 des ersten Profils 10 ist dabei zumindest bereichsweise formkomplementär zu dem zweiten Längsabschnitt 26 des zweiten Profils 20 ausgebildet. Mit anderen Worten liegen die beiden abgekanteten Bereiche bzw. Zacken, wie in der Fig. 1 erkennbar, formkomplementär übereinander.

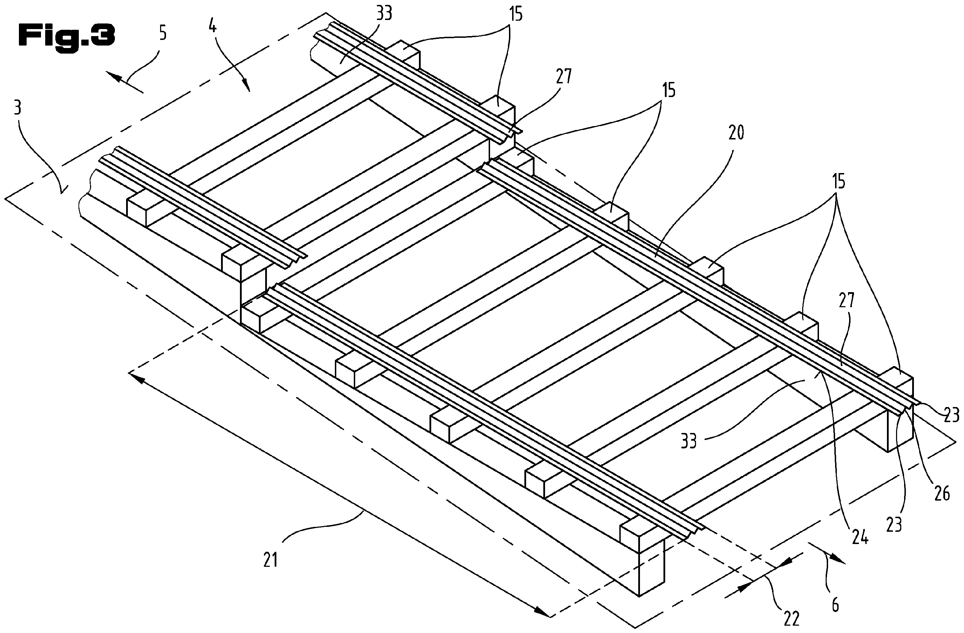

In den Fig. 1 und 3 ist auch gezeigt, dass das zumindest eine zweite Profil 20 in Bezug auf die Anlagefläche 24 des ersten Längsabschnitts 23 einen symmetrischen, bevorzugt einen im Wesentlichen M-förmigen, Querschnitt aufweist. Im montierten Zustand des zweiten Profils 20 stehen die Zacken dieser Wellen- bzw. M-Form bevorzugt nach oben, also zeigen von der Montagefläche 3 weg. Zudem weist das zweite Profil 20 entlang seiner Länge 21 eine Rinne 27 auf. Wasser, insbesondere Regenwasser, kann über einen Spalt 32 zwischen den Photovoltaikmodulen 2 in die Rinne 27 fließen und über diese wiederum in Richtung Unterkante 6 abfließen.

Besonders in den Fig. 2, 5 und 6 ist gezeigt, dass der zweite Längsabschnitt 16 des ersten Profils 10 an seinem im montierten Zustand des Photovoltaikmoduls 2 der Unterkante 6 zugewandten Ende eine Aussparung 34 bzw. einen Endanschlag aufweist, welche zur Anlage am Rahmen 9 ausgebildet ist.

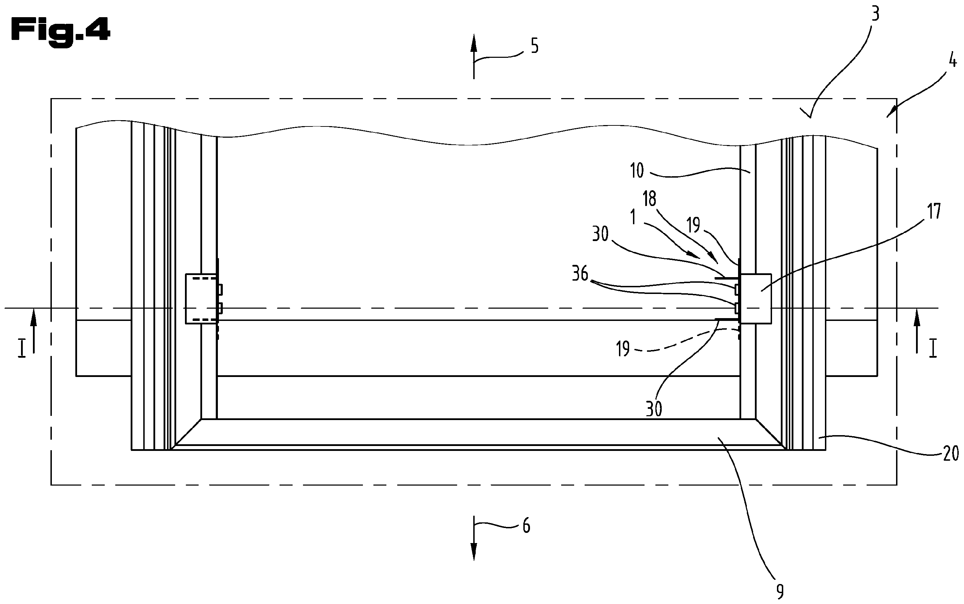

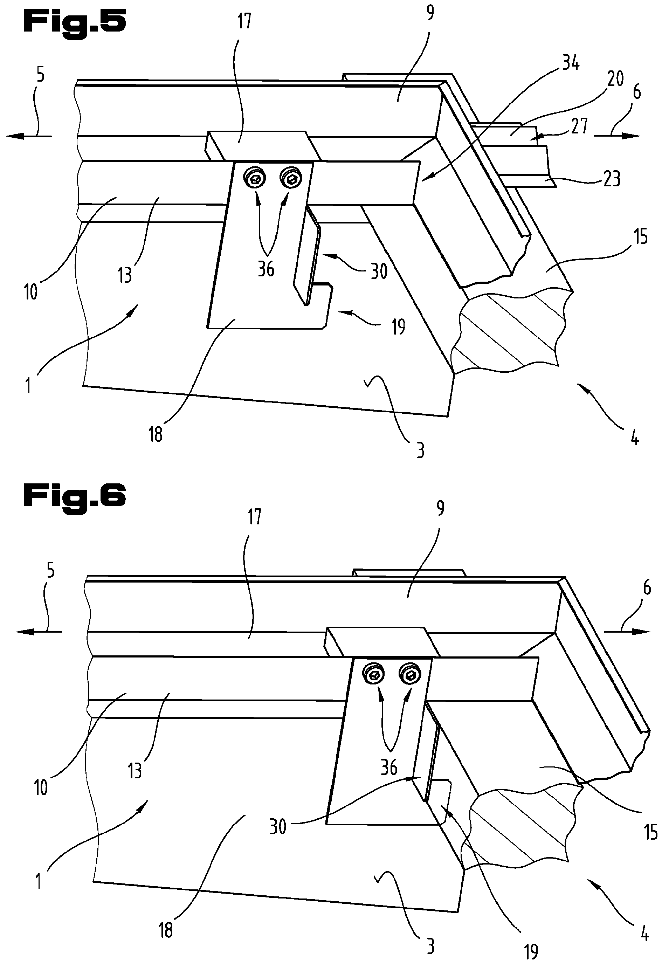

Darüber hinaus weist das Arretierelement 18 zumindest einen Stabilisierungsabschnitt 30 auf, welcher sich in einem montierten Zustand des Photovoltaikmoduls 2 im Wesentlichen parallel zur Unterkante 6 erstreckt und an der Unterkonstruktion 4, insbesondere an der horizontalen Latte 15, abstützbar ist. Der Stabilisierungsabschnitt 30 und der Arretierabschnitt 19 sind dabei zueinander orthogonal ausgebildet. Das in der Fig. 2 dargestellte Arretierelement 18 ist symmetrisch geformt und weist demnach zwei Stabilisierungsabschnitte 30 auf. Das hat den Vorteil, dass das Arretierelement 18 auf zwei Arten mit dem Koppelelement 17 bzw. mit dem ersten Profil 10 gekoppelt werden kann. Der Fig. 4 zeigt eine Draufsicht auf das in der Fig. 1 gezeigte montierte Montagesystem 1 sowie auf ein Photovoltaikmodul 2, wobei das Modul selbst bzw. die Modul-Oberseite 7 zur besseren Übersicht ausgeblendet ist. Der Fig. 4 ist zu entnehmen, dass die beiden Stabilisierungsabschnitte 30 des rechten Arretierelements 18 und des linken Arretierelements 18 bei Betrachtung der Modul-Oberseite 7 jeweils nach links zeigen können. Ebenso wäre es aber auch denkbar, dass die Stabilisierungsabschnitte 30 der beiden gezeigten Arretierelemente 18 einender zugewandt oder auch voneinander abgewandt positioniert sind. Weist das Arretierelement 18, wie in den Fig. 5 und 6 gezeigt, jeweils nur einen Stabilisierungsabschnitt 30 und/oder nur einen Arretierabschnitt 19 auf, so sind für eine Koppelung mit beiden Seiten des Rahmens 9 zwei baugleiche, aber gespiegelt ausgebildete Arretierelemente 18 erforderlich.

Das Montagesystem 1 ist gegenüber der Unterkonstruktion 4, insbesondere gegenüber der horizontalen Latte 15, werkzeuglos und lösbar arretierbar oder arretiert. Gemäß der gezeigten Ausführungsbeispiele sind lediglich Schrauben 35 zwischen Koppelelementen 17 und Rahmen 9 , sowie Schrauben 36 zwischen Koppelelementen 17 und Arretierelementen 18 vorgesehen. Dazu sind die Koppelelemente 17, Arretierelemente 18 und ersten Profile 10 vorteilhafterweise mit entsprechenden Bohrungen bzw. Durchbrüchen ausgebildet.

Ein Kontaktbereich 31 zwischen dem Photovoltaikmodul 2 und dem zumindest einen Koppelelement 17, und/oder ein Kontaktbereich 31 zwischen dem zumindest einen ersten Profil 10 und dem zumindest einen zweiten Profil 20 ist dabei dichtmittelfrei ausgebildet. Besonders der Fig. 1 ist dabei zu entnehmen, dass die entsprechenden Kontaktbereiche möglichst plan aufeinanderliegen und ein Eindringen von Flüssigkeiten damit hintangehalten werden kann. Insbesondere wenn das zweite Profil 20 mit einer Rinne 27 ausgebildet ist, kann etwaiges Regenwasser selbstständig abfließen, ohne die Kontaktbereiche zu erreichen.

Darüber hinaus ist gezeigt, dass das Montagesystem 1 zumindest ein im Wesentlichen keilförmiges Dachneigungs-Ausgleichelement 33 zum Ausgleichen der Dachneigung umfasst, welches auf oder unter der Unterkonstruktion 4, insbesondere auf oder unter der horizontalen Latte 15, positionierbar ist. Die Dachneigungs-Ausgleichelemente 33 sind dabei im Besonderen der Fig. 3 zu entnehmen.

Das Photovoltaikmodul 2 kann in seinem montierten Zustand in Richtung zur Unterkante 6 ein weiteres montiertes Photovoltaikmodul 29 überragen. Bevorzugt überragt das Photovoltaikmodul 2 ein weiteres Photovoltaikmodul 29 um maximal 5 cm, besonders bevorzugt um maximal 2 cm, insbesondere um maximal 1 cm.

Das Montagesystem 1 ist - wie in der Fig. 1 dargestellt - im montierten Zustand des Photovoltaikmoduls 2 bei Betrachtung der Modul-Oberseite 7 nicht sichtbar und überragt das Photovoltaikmodul 2 im montierten Zustand des Photovoltaikmoduls 2 bei Betrachtung der Modul-Oberseite 7 die Modul-Oberseite 7 nicht.

Ein Verfahren zur Indach-Montage von gerahmten Photovoltaikmodulen 2 auf einer Montagefläche 3, sowie wie dies insbesondere in den Fig. 2, 3, 5 und 6 gezeigt ist umfasst im Wesentlichen folgende Verfahrensschritte, wobei die beschriebenen Reihenfolge der Verfahrensschritte natürlich auch anders erfolgen kann. Demnach sind Begriffe wie zuerst, zunächst, danach, anschließend usw. nicht einschränkend zu interpretieren.

Auf einer Montagefläche 3 umfassend eine geneigte Unterkonstruktion 4, eine Oberkante 5 und eine Unterkante 6 werden zunächst mehrere zweite Profile 20 positioniert. In der Fig. 3 sind dabei ausschnittsweise insgesamt vier zweite Profile 20 gezeigt, wobei jeweils zwischen zwei in horizontaler Richtung zueinander benachbarten zweiten Profilen 20 ein Photovoltaikmodul 2 montiert werden kann. Die tatsächliche Anzahl der zweiten Profile 20 sowie auch deren Abstand zueinander ist von der Anzahl und Größe der zu montierenden Photovoltaikmodule 2 abhängig. Die Unterkonstruktion 4 umfasst in vertikaler Richtung, also sich zwischen Oberkante 5 und Unterkante 6 erstreckende keilförmige Dachneigungs-Ausgleichelemente 33, auf welchen parallel zu Oberkante 5 und Unterkante 6 verlaufend mehrere horizontale Latten 15 befestigt, insbesondere angeschraubt sind. Die Unterkonstruktion 4 kann darüber hinaus auch nicht figürlich gezeigte Konterlatten umfassen. Je nach Größe und auch spezifischen Anforderungen in Bezug auf eine Dachlast bzw. Flächenbelastung der Photovoltaikmodule 2 kann die Anzahl und Dimension an horizontalen Latten 15 variiert werden. Gemäß Fig. 3 sind je Photovoltaikmodul 2 fünf horizontale Latten 15 vorgesehen. Die zweiten Profile 20 können an den horizontalen Latten 15 gegebenenfalls befestigt sein bzw. mit diesen verschraubt werden.

Die Vormontage des Montagesystems 1 an dem oder den Photovoltaikmodulen 2 kann parallel, vor oder auch nach der soeben beschriebenen Positionierung der zweiten Profile 20 auf der Montagefläche 3 erfolgen. Für die Vormontage werden zumindest zwei Koppelelemente 17 und zumindest zwei Arretierelemente 18 bereitgestellt. Die Vormontage ist insbesondere in der Fig. 2 veranschaulicht, wobei die Komponenten des Montagesystems 1 sowie der Rahmen 9 des Photovoltaikmoduls 2 in dreidimensionaler Explosionsansicht gezeigt sind.

Jene zwei Seiten des Rahmens 9, welche sich in einem späteren montierten Zustand des Photovoltaikmoduls 2 vom Oberkante 5 in Richtung zur Unterkante 6 erstrecken, werden mit jeweils zumindest einem der Koppelelemente 17 gekoppelt. Dieser gekoppelte Zustand ist insbesondere in der in der Fig. 1 gezeigten Schnittansicht veranschaulicht. Das Koppeln kann beispielsweise durch Klemmung mittels Schrauben 35 erfolgen. Vorteilhafterweise werden Koppelelemente 17 überall dort mit dem Rahmen 9 gekoppelt, wo der Rahmen 9 im späteren montierten Zustand des Photovoltaikmoduls 2 die Unterkonstruktion 4 bzw. eine der horizontalen Latten 15 kreuzt.

An zumindest einzelnen jener Stellen der Unterkonstruktion 4, an denen eine Dachlatte 15 angeordnet ist und an denen die ersten Längsabschnitte 13 der zumindest zwei ersten Profile 10 die horizontale Latte 15 kreuzt, werden jeweils ein Koppelelement 17 und ein Arretierelement 18 mit dem Rahmen 9 der Modul-Unterseite 8 verbunden. Je mehr Koppelelemente 17 und Arretierelemente 18 vorgesehen sind, desto stabiler ist die montierte Konstruktion.

Nach dem Verbinden von Koppelelementen 17 und Rahmen 9 erfolgt ein Koppeln der Koppelelemente 17 mit jeweils einem Arretierelement 18. Dieses Koppeln kann ebenso mittels Schrauben 36 erfolgen.

Wenn das Montagesystem 1 zudem erste Profile 10 umfasst, werden die Koppelelemente 17 in diesem Vormontageschritt nicht nur mit den Arretierelementen 18, sondern auch mit jeweils dem zweiten Längsabschnitt 16 der ersten Profile 10 gekoppelt bzw. verschraubt. Der zweite Längsabschnitt 16 der ersten Profile 10 wird dabei zwischen Koppelelement 17 und Arretierelement 18 positioniert.

Die Vormontage des Montagesystems 1 auf dem Photovoltaikmodul 2 ist somit nach Koppelung von Koppelelement 17, erstem Profil 10 und Arretierelement 18 abgeschlossen. Im Sinne der Arbeitseffizienz, Ergonomie und Arbeitssicherheit kann diese Vormontage insbesondere am Boden erfolgen und das vormontierte Photovoltaikmodul 2 erst danach auf das Dach gehoben werden.

Im Anschluss an die Vormontage wird das vormontierte Photovoltaikmodul 2 zur Anlage an die Unterkonstruktion 4 gebracht. Konkret werden die Koppelelemente 17 an die Unterkonstruktion 4, insbesondere an die horizontalen Latten 15 der Unterkonstruktion 4, respektive an die Anlageflächen 24 der bereits positionierten zweiten Profile 20, angelegt. Wenn, so wie insbesondere in den Fig. 1 und 2 ersichtlich, erste Profile 10 vormontiert wurden, so wird der jeweils erste Längsabschnitt 13 der ersten Profile 10 an die Unterkonstruktion 4, insbesondere an eine horizontalen Latten 15 angelegt. Folglich werden die Koppelelemente 17 hierbei nicht direkt an die horizontalen Latten 15 bzw. an die Anlageflächen 24 der zweiten Profile 20 angelegt, sondern die ersten Profile 10 dazwischen positioniert.

Die Anlageflächen 14 der ersten Längsabschnitte 13 der an dem Photovoltaikmodul 2 vormontierten ersten Profile 10 werden zur Anlage an die Anlageflächen 24 der ersten Längsabschnitte 23 der zumindest zwei zweiten Profile 20 gebracht. Zudem werden die dritten Längsabschnitte 25 der zumindest zwei ersten Profile 10 zur Anlage an die zumindest bereichsweise formkomplementären zweiten Längsabschnitte 26 der zumindest zwei zweiten Profile 20 gebracht.

Zuletzt erfolgt, wie insbesondere in den Fig. 5 und 6 gezeigt, ein Verschieben des vormontierten Photovoltaikmoduls 2 im Wesentlichen parallel zur Unterkonstruktion 4 in Richtung zur Unterkante 6, wobei ein Arretierabschnitt 19 des Arretierelements 18 unter der Unterkonstruktion 4, insbesondere unter der horizontalen Latte 15 der Unterkonstruktion 4, positioniert wird. In seinem derart montierten Zustand ist das Photovoltaikmodul 2 gegen ein Verschieben in Richtung zur Unterkante 6 und/oder gegen ein Abheben von der Unterkonstruktion 4 arretiert. Wie auch bei der Fig. 4 ist das Photovoltaikmodul 2 in den Fig. 5 und 6 lediglich durch seinen Rahmen 9, jedoch ohne das Leistungsmodul selbst, dargestellt.

Im Falle einer Demontage wird das Photovoltaikmodul 2 durch Verschieben des Photovoltaikmoduls 2 parallel zur Unterkonstruktion 4 in Richtung zur Oberkante 5 wieder gelöst.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Montagesystem | 30 31 | Stabilisierungsabschnitt Kontaktbereich |
| 2 | Photovoltaikmodul | 32 | Spalt |
| 3 | Montagefläche | 33 | Dachneigungs-Ausgleichelement |
| 4 | Unterkonstruktion | 34 | Aussparung |
| 5 | Oberkante | 35 | Schraube |
| 6 | Unterkante | 36 | Schraube |
| 7 | Modul-Oberseite | | |
| 8 | Modul-Unterseite | | |
| 9 | Rahmen | | |
| 10 | erstes Profil | | |
| 11 | Länge | | |
| 12 | Breite | | |
| 13 | erster Längsabschnitt | | |
| 14 | Anlagefläche | | |
| 15 | horizontale Latte | | |
| 16 | zweiter Längsabschnitt | | |
| 17 | Koppelelement | | |
| 18 | Arretierelement | | |
| 19 | Arretierabschnitt | | |
| 20 | zweites Profil | | |
| 21 | Länge | | |
| 22 | Breite | | |
| 23 | erster Längsabschnitt | | |
| 24 | Anlagefläche | | |
| 25 | dritter Längsabschnitt | | |
| 26 | zweiter Längsabschnitt | | |
| 27 | Rinne | | |
| 28 | Schlitz | | |
| 29 | weiteres Photovoltaikmodul | | |

## Patentansprüche

1. Montagesystem (1) zur Montage von gerahmten Photovoltaikmodulen (2) auf einer geneigten Montagefläche (3), die Montagefläche (3) umfassend eine Unterkonstruktion (4), eine Oberkante (5) und ein Unterkante (6),
das Photovoltaikmodul (2) umfassend eine Modul-Oberseite (7), welche Modul-Oberseite (7) in einem montierten Zustand des Photovoltaikmoduls (2) von der Montagefläche (3) abgewandt ist, eine Modul-Unterseite (8), welche Modul-Unterseite (8) im montierten Zustand des Photovoltaikmoduls (2) der Montagefläche (3) zugewandt ist, und einen Rahmen (9), **dadurch gekennzeichnet, dass**
- das Montagesystem (1) zumindest ein im Wesentlichen klammerförmiges Koppelelement (17) und zumindest ein Arretierelement (18) umfasst,
- wobei das Koppelelement (17) mit dem Rahmen (9) koppelbar ist, und
- wobei das Arretierelement (18) mit dem Koppelelement (17) koppelbar ist, und
- wobei das Arretierelement (18) zumindest einen Arretierabschnitt (19) aufweist, welcher Arretierabschnitt (19) unter der Unterkonstruktion (4), insbesondere unter einer horizontalen Latte (15) der Unterkonstruktion (4), positionierbar ist, und
- wobei das Montagesystem (1) im montierten Zustand des Photovoltaikmoduls (2) gegen ein Verschieben in Richtung zur Unterkante (6) und/oder gegen ein Abheben von der Unterkonstruktion (4) arretierbar oder arretiert ist.

2. Montagesystem (1) nach Anspruch 1, **dadurch gekennzeichnet, dass** es zumindest ein erstes Profil (10) umfasst,
- welches erste Profil (10) eine Länge (11) und eine Breite (12) aufweist,
- welches erste Profil (10) einen sich vollständig oder partiell über die Länge (11) erstreckenden ersten Längsabschnitt (13) aufweist, welcher erste Längsabschnitt (13) eine Anlagefläche (14) zur Anlage an die Unterkonstruktion (4), insbesondere an die horizontale Latte (15) der Unterkonstruktion (4), aufweist, und
- welches erste Profil (10) einen sich vollständig oder partiell über die Länge (11) erstreckenden zweiten Längsabschnitt (16) aufweist,
- wobei das Arretierelement (18) zusätzlich oder alternativ zu dem Koppelelement (17) mit dem zweiten Längsabschnitt (16) des ersten Profils (10) koppelbar ist.

3. Montagesystem (1) nach Anspruch 2, **dadurch gekennzeichnet, dass** der zweite Längsabschnitt (16) des ersten Profils (10) im Wesentlichen orthogonal zum ersten Längsabschnitt (13) des ersten Profils (10) ausgebildet ist.

4. Montagesystem (1) nach Anspruch 2 oder 3, **dadurch gekennzeichnet, dass** es zumindest ein zweites Profil (20) umfasst,
- welches zweite Profil (20) eine Länge (21) und eine Breite (22) aufweist, und
- welches zweite Profil (20) zumindest einen sich vollständig oder partiell über die Länge (21) erstreckenden ersten Längsabschnitt (23) aufweist, welcher erste Längsabschnitt (23) zumindest eine Anlagefläche (24) zur direkten Anlage an die Unterkonstruktion (4), insbesondere an die horizontale Latte (15), aufweist,
- wobei die Anlagefläche (14) des ersten Längsabschnitts (13) des ersten Profils (10) zumindest abschnittsweise an die Anlagefläche (24) des ersten Längsabschnitt (23) des zweiten Profils (20) anlegbar ist.

5. Montagesystem (1) nach Anspruch 4, **dadurch gekennzeichnet, dass** das erste Profil (10) zumindest einen sich vollständig oder partiell über die Länge (11) erstreckenden dritten Längsabschnitt (25) aufweist, welcher dritte Längsabschnitt (25) in Bezug auf die Anlagefläche (14) des ersten Längsabschnitts (13) zumindest zweifach abgewinkelt ist, und
dass das zweite Profil (20) einen sich vollständig oder partiell über die Länge (21) erstreckenden zweiten Längsabschnitt (26) aufweist, welcher zweite Längsabschnitt (26) in Bezug auf die Anlagefläche (24) des ersten Längsabschnitts (23) zumindest zweifach abgewinkelt ist,
wobei der dritte Längsabschnitt (25) des ersten Profils (10) zumindest bereichsweise formkomplementär zu dem zweiten Längsabschnitt (26) des zweiten Profils (20) ausgebildet ist.

6. Montagesystem (1) nach Anspruch 4 oder 5, **dadurch gekennzeichnet, dass** das zumindest eine zweite Profil (20) in Bezug auf die Anlagefläche (24) des ersten Längsabschnitts (23) einen symmetrischen, bevorzugt im Wesentlichen M-förmigen, Querschnitt aufweist.

7. Montagesystem (1) nach einem der Ansprüche 4 bis 6, **dadurch gekennzeichnet, dass** das zweite Profil (20) entlang seiner Länge (21) eine Rinne (27) aufweist.

8. Montagesystem (1) nach einem der vorhergehenden Ansprüche, **dadurch gekennzeichnet, dass** das Koppelelement (17) einen Schlitz (28), eine Nut und/oder eine Kerbe zur Ausbildung einer Schraub-, Steck- und/oder Rastverbindung mit dem Rahmen (9) aufweist.

9. Montagesystem (1) nach einem der vorhergehenden Ansprüche, **dadurch gekennzeichnet, dass** das Photovoltaikmodul (2) in seinem montierten Zustand in Richtung zur Unterkante (6) ein weiteres montiertes Photovoltaikmodul (29) überragt.

10. Montagesystem (1) nach einem der vorhergehenden Ansprüche, **dadurch gekennzeichnet, dass** das Arretierelement (18) zumindest einen Stabilisierungsabschnitt (30) aufweist, welcher Stabilisierungsabschnitt (30) sich in einem montierten Zustand des Photovoltaikmoduls (2) im Wesentlichen parallel zur Unterkante (6) erstreckt und an der Unterkonstruktion (4), insbesondere an der horizontalen Latte (15), abstützbar ist.

11. Montagesystem (1) nach einem der vorhergehenden Ansprüche, **dadurch gekennzeichnet, dass** das Montagesystem (1) gegenüber der Unterkonstruktion (4), insbesondere gegenüber der horizontalen Latte (15), werkzeuglos und lösbar arretierbar oder arretiert ist.

12. Montagesystem (1) nach einem der vorhergehenden Ansprüche, **dadurch gekennzeichnet, dass** das Montagesystem (1) im montierten Zustand des Photovoltaikmoduls (2) bei Betrachtung der Modul-Oberseite (7) nicht sichtbar ist und/oder dass das Montagesystem (1) das Photovoltaikmodul (2) im montierten Zustand des Photovoltaikmoduls (2) bei Betrachtung der Modul-Oberseite (7) nicht überragt.

13. Montagesystem (1) nach einem der vorhergehenden Ansprüche, **dadurch gekennzeichnet, dass** ein Kontaktbereich (31) zwischen dem Photovoltaikmodul (2) und dem zumindest einen Koppelelement (17), und/oder ein Kontaktbereich (31) zwischen dem zumindest einen ersten Profil (10) und dem zumindest einen zweiten Profil (20) dichtmittelfrei ausgebildet ist.

14. Montagesystem (1) nach einem der vorhergehenden Ansprüche, **dadurch gekennzeichnet, dass** das Montagesystem (1) zumindest ein im Wesentlichen keilförmiges Dachneigungs-Ausgleichelement (33) zum Ausgleichen der Dachneigung umfasst, welches Dachneigungs-Ausgleichelement (33) auf oder unter der Unterkonstruktion (4), insbesondere auf oder unter der horizontalen Latte (15), positionierbar ist.

15. Montagesystem (1) nach einem Ansprüche 2 bis 14, **dadurch gekennzeichnet, dass** der zweite Längsabschnitt (16) des ersten Profils (10) an seinem im montierten Zustand des Photovoltaikmoduls (2) der Unterkante (6) zugewandten Ende eine Aussparung (34) aufweist, welche Aussparung (34) zur Anlage am Rahmen (9) ausgebildet ist.

16. Verfahren zur Montage von gerahmten Photovoltaikmodulen (2) auf einer geneigten Montagefläche (3), die Montagefläche (3) umfassend eine Unterkonstruktion (4), eine Oberkante (5) und ein Unterkante (6),
umfassend die Verfahrensschritte:
- Bereitstellen von zumindest einem gerahmten Photovoltaikmodul (2), umfassend eine Modul-Oberseite (7), welche Modul-Oberseite (7) in einem montierten Zustand des Photovoltaikmoduls (2) von der Montagefläche (3) abgewandt ist, eine Modul-Unterseite (8), welche Modul-Unterseite (8) im montierten Zustand des Photovoltaikmoduls (2) der Montagefläche (3) zugewandt ist, und einen Rahmen (9),
- Bereitstellen eines Montagesystems (1) nach einem der Ansprüche 1 bis 16, umfassend zumindest zwei Koppelelemente (17) und zumindest zwei Arretierelemente (18),
- Koppeln jeweils einer sich im montierten Zustand des Photovoltaikmoduls (2) von der Oberkante (5) in Richtung zur Unterkante (6) erstreckenden Seite des Rahmens (9) mit jeweils zumindest einem der Koppelelemente (17),
- Koppeln der Koppelelemente (17) mit jeweils dem Arretierelement (18),
- Anlage der Koppelelemente (17) an die Unterkonstruktion (4), insbesondere an eine horizontale Latte (15) der Unterkonstruktion (4).
- Verschieben des mit den zumindest zwei Koppelelementen (17) und mit den zumindest zwei Arretierelementen (18) vormontierten Photovoltaikmoduls (2) im Wesentlichen parallel zur Unterkonstruktion (4) in Richtung zur Unterkante (6),
- wobei ein Arretierabschnitt (19) des Arretierelements (18) unter der Unterkonstruktion (4), insbesondere unter der horizontalen Latte (15) der Unterkonstruktion (4), positioniert wird,
- sodass das Montagesystem (1) im montierten Zustand des Photovoltaikmoduls (2) gegen ein Verschieben in Richtung zur Unterkante (6) und/oder gegen ein Abheben von der Unterkonstruktion (4) arretiert wird.

17. Verfahren nach Anspruch 16, **dadurch gekennzeichnet, dass** das Montagesystems (1) mit zumindest zwei ersten Profilen (10) bereitgestellt wird, und
dass die Koppelelemente (17) alternativ oder zusätzlich zu den Arretierelementen (18) mit jeweils dem zweiten Längsabschnitt (16) der ersten Profile (10) gekoppelt werden, und
dass der jeweils erste Längsabschnitt (13) der zumindest zwei ersten Profile (10) an die Unterkonstruktion (4), insbesondere an eine horizontale Latte (15) der Unterkonstruktion (4), angelegt wird, und
dass das mit den zumindest zwei ersten Profilen (10), mit den zumindest zwei Koppelelementen (17) und mit den zumindest zwei Arretierelementen (18) vormontierte Photovoltaikmodul (2) im Wesentlichen parallel zur Unterkonstruktion (4) in Richtung zur Unterkante (6) verschoben wird.

18. Verfahren nach Anspruch 16 oder 17, **dadurch gekennzeichnet, dass** das Photovoltaikmodul (2) durch Verschieben des Photovoltaikmoduls (2) parallel zur Unterkonstruktion (4) in Richtung zur Oberkante (5) gelöst wird.

19. Verfahren nach einem der Ansprüche 16 bis 18, **dadurch gekennzeichnet, dass** zumindest zwei zweite Profile (20) direkt an die Unterkonstruktion (4), insbesondere an die horizontale Latte (15), angelegt werden, und
dass die Anlageflächen (14) der ersten Längsabschnitte (13) der zumindest zwei an dem Photovoltaikmodul (2) vormontierten ersten Profile (10) zur Anlage an die Anlageflächen (24) der ersten Längsabschnitte (23) der zumindest zwei zweiten Profile (20) gebracht werden, und/oder dass die dritten Längsabschnitte (25) der zumindest zwei ersten Profile (10) zur Anlage an die zumindest bereichsweise formkomplementären zweiten Längsabschnitte (26) der zumindest zwei zweiten Profile (20) gebracht werden.

20. Verfahren nach einem der Ansprüche 16 bis 19, **dadurch gekennzeichnet, dass** an zumindest einzelnen jener Stellen der Unterkonstruktion (4), an denen eine horizontale Latte (15) angeordnet ist und an denen die ersten Längsabschnitte (13) der zumindest zwei ersten Profile (10) die horizontale Latte (15) kreuzen, jeweils ein Koppelelement (17) und ein Arretierelement (18) mit dem Rahmen (9) der Modul-Unterseite (8) verbunden werden.
